# EUROPEAN PATENT APPLICATION

(11) **EP 4 471 378 A1**
(43) Date of publication of application: **04.12.2024**
(21) Application number: 23213293.6
(22) Date of filing: 30.11.2023
(51) Int. Cl.: G01C 21/20, G01C 21/26, B60W 30/06, B60W 40/072, G01C 21/36

(54) **EVALUATION METHOD AND APPARATUS FOR DRIVING TRAJECTORY OF VEHICLE WITHOUT GPS SIGNAL**

(30) Priority: 30.05.2023 CN 202310628178
(71) Applicant: Chongqing Changan Automobile Co., Ltd., Chongqing 400023 (CN)
(72) Inventor: REN, Xiangyun, Chongqing 400023 (CN); PENG, Xiangjun, Chongqing 400023 (CN); YU, Longshan, Chongqing 400023 (CN)
(74) Representative: M. Zardi & Co S.A.

(57) **Abstract**

A method and an apparatus for evaluating a running trajectory of a vehicle without a GPS signal are provided, which belong to the technical field of vehicles. The method includes: obtaining coordinate information of a running trajectory of a vehicle in a running process of the vehicle; after N pieces of coordinate information are obtained, determining a singular value feature matrix; obtaining a target eigenvalue of the singular value feature matrix, and determining whether the target eigenvalue is less than a straight line determining threshold; and when the target eigenvalue is less than the straight line determining threshold, determining that a section on which a running trajectory corresponding to the N pieces of coordinate information is located is a straight section; or when the target eigenvalue is not less than the straight line determining threshold, determining that a section on which a running trajectory corresponding to the N pieces of coordinate information is located is a turning section. The running trajectory of the vehicle is evaluated with low costs and high efficiency when there is no GPS signal. In addition, applying the low-cost and high-efficiency method for evaluating a running trajectory of a vehicle to a mapping scenario for autonomous driving can reduce mapping costs and improve mapping efficiency.

## Description

### Field of the Invention

The present disclosure relates to the technical field of vehicles, and in particular, to a method and an apparatus for evaluating a running trajectory of a vehicle without a GPS signal.

### Background of the Invention

With the continuous development of a driverless technology, vehicle driving is gradually classified in two directions: autonomous driving and automatic parking. Auto parking assist (APA for short) is a method by which automatic recognition of a parking space and automatic parking in the parking space can be implemented under assistance of an in-vehicle sensor, a processor, and a control system without manual intervention.

An automatic parking system is mainly based on various sensor devices disposed around the automatic parking system, in particular a vision-based monocular or binocular camera sensor system. These sensor devices obtain images of the sensor devices and an ambient environment, relative positions, corners, and the like, to determine a current vehicle status. In addition, related parking space recognition, path analysis, and planning are performed, a control instruction is transmitted to an actuator, and real-time transmission is performed, to finally implement a related parking task.

At present, an L3 or L3+ level-based automatic parking method temporarily depends on coverage of a high-precision map. However, in a related region that is not covered by the high-precision map, particularly a closed environment such as an underground parking lot, a related mapping operation needs to be performed first.

There is no global positioning system (GPS) signal in an underground environment, and only inference mapping can be performed through dead reckoning, an image sensing device, and the like. However, a vehicle usually runs in a "serpentine" "straight" path in a parking lot, and consequently, whether a section is a straight section or a turning section cannot be accurately determined and estimated.

To accurately determine and estimate whether the section is a straight section or a turning section, a large amount of image data may be added, or an additional sensor may be disposed. However, in the two manners, determining efficiency may be affected on the one hand, and additional costs may be brought on the other hand.

### Summary of the Invention

In view of the foregoing problem, a method and an apparatus for evaluating a running trajectory of a vehicle without a GPS signal are provided, to solve the foregoing problem or at least partially solve the foregoing problem.

The present disclosure provides a method for evaluating a running trajectory of a vehicle without a GPS signal. The method includes:
obtaining coordinate information of a running trajectory of a vehicle in a running process of the vehicle;
after N pieces of coordinate information are obtained, determining a singular value feature matrix based on the N pieces of coordinate information, N being a positive integer;
obtaining a target eigenvalue of the singular value feature matrix, and determining whether the target eigenvalue is less than a straight line determining threshold; and
when the target eigenvalue is less than the straight line determining threshold, determining that a section on which a running trajectory corresponding to the N pieces of coordinate information is located is a straight section; or
when the target eigenvalue is not less than the straight line determining threshold, determining that a section on which a running trajectory corresponding to the N pieces of coordinate information is located is a turning section.

Optionally, the method further includes:
determining a target eigenvalue corresponding to all coordinate information corresponding to the running trajectory; and
determining the straight line determining threshold based on the target eigenvalue corresponding to all the coordinate information and a preset reference value.

Optionally, the method further includes:
for the straight section, mapping the straight section by using image data of a first preset proportion in image data corresponding to the N pieces of coordinate information corresponding to the straight section; or
for the turning section, mapping the turning section by using image data of a second preset proportion in image data corresponding to the N pieces of coordinate information corresponding to the turning section.

The first preset proportion is less than the second preset proportion.

Optionally, the obtaining coordinate information of a running trajectory of a vehicle includes:
obtaining the coordinate information of the running trajectory of the vehicle by taking a current location of the vehicle is a coordinate system origin.

Optionally, the method further includes:
when a type of a previous section is different from that of a current section, constructing the coordinate system origin by taking a vehicle location corresponding to the current section as the origin.

Optionally, the obtaining a target eigenvalue of the singular value feature matrix, and determining whether the target eigenvalue is less than a straight line determining threshold includes:
obtaining the target eigenvalue of the singular value feature matrix, and adding the target eigenvalue to a discriminant; and
when there are at least M target eigenvalues in the discriminant, determining whether a currently obtained target eigenvalue is less than the straight line determining threshold.
M is a positive integer.

Optionally, the obtaining coordinate information of a running trajectory of a vehicle includes:
collecting target sensor data from a preset sensor; and
calculating the coordinate information of the running trajectory of the vehicle based on the target sensor data.

Optionally, the preset sensor includes at least one of the following:
an inertial sensor and a speedometer.

Optionally, the collecting target sensor data from a preset sensor includes:
obtaining data collected by the preset sensor; and
denoising the data to obtain the target sensor data.

The present disclosure further provides an apparatus for evaluating a running trajectory of a vehicle without a GPS signal. The apparatus includes:
an obtaining module, configured to obtain coordinate information of a running trajectory of a vehicle in a running process of the vehicle;
a singular value feature matrix determining module, configured to: after N pieces of coordinate information are obtained, determine a singular value feature matrix based on the N pieces of coordinate information, N being a positive integer;
a determining module, configured to obtain a target eigenvalue of the singular value feature matrix, and determine whether the target eigenvalue is less than a straight line determining threshold;
a first determining module, configured to: when the target eigenvalue is less than the straight line determining threshold, determine that a section on which a running trajectory corresponding to the N pieces of coordinate information is located is a straight section; and
a second determining module, configured to: when the target eigenvalue is not less than the straight line determining threshold, determine that a section on which a running trajectory corresponding to the N pieces of coordinate information is located is a turning section.

Optionally, the apparatus further includes:
a threshold determining module, configured to: determine a target eigenvalue corresponding to all coordinate information corresponding to the running trajectory, and determine the straight line determining threshold based on the target eigenvalue corresponding to all the coordinate information and a preset reference value.

Optionally, the apparatus further includes:
a first mapping module, configured to: for the straight section, map the straight section by using image data of a first preset proportion in image data corresponding to the N pieces of coordinate information corresponding to the straight section; and
a second mapping module, configured to: for the turning section, map the turning section by using image data of a second preset proportion in image data corresponding to the N pieces of coordinate information corresponding to the turning section.

The first preset proportion is less than the second preset proportion.

Optionally, the obtaining module is configured to obtain the coordinate information of the running trajectory of the vehicle by taking a current location of the vehicle is a coordinate system origin.

Optionally, the apparatus further includes:
a coordinate reconstruction module, configured to: when a type of a previous section is different from that of a current section, construct the coordinate system origin by taking a vehicle location corresponding to the current section as the origin.

Optionally, the determining module is configured to: obtain the target eigenvalue of the singular value feature matrix, and add the target eigenvalue to a discriminant; and when there are at least M target eigenvalues in the discriminant, determine whether a currently obtained target eigenvalue is less than the straight line determining threshold, M being a positive integer.

Optionally, the obtaining module is configured to: collect target sensor data from a preset sensor; and calculate the coordinate information of the running trajectory of the vehicle based on the target sensor data.

Optionally, the preset sensor includes at least one of the following:
an inertial sensor and a speedometer.

Optionally, the obtaining module is configured to: obtain data collected by the preset sensor; and denoise the data to obtain the target sensor data.

The present disclosure further provides a vehicle, including a processor, a memory, and a computer program stored on the memory and capable of running on the processor. When the computer program is executed by the processor, the method for evaluating a running trajectory of a vehicle without a GPS signal is implemented.

The present disclosure further provides a computer-readable storage medium, and a computer program is stored on the computer-readable storage medium. When the computer program is executed by a processor, the method for evaluating a running trajectory of a vehicle without a GPS signal is implemented.

The present disclosure has the following beneficial effects.

In the present disclosure, the coordinate information of the running trajectory of the vehicle is obtained in the running process of the vehicle. After the N pieces of coordinate information are obtained, the singular value feature matrix is determined based on the N pieces of coordinate information. N is a positive integer. The target eigenvalue of the singular value feature matrix is obtained, and whether the target eigenvalue is less than the straight line determining threshold is determined. When the target eigenvalue is less than the straight line determining threshold, it is determined that the section on which the running trajectory corresponding to the N pieces of coordinate information is located is the straight section; or when the target eigenvalue is not less than the straight line determining threshold, it is determined that the section on which the running trajectory corresponding to the N pieces of coordinate information is located is the turning section. According to embodiments of the present disclosure, whether the section corresponding to the running trajectory of the vehicle is the straight section or the turning section can be determined based on only the running trajectory obtained by an existing sensor of the vehicle. Therefore, the running trajectory of the vehicle is evaluated with low costs and high efficiency when there is no GPS signal. In addition, applying the low-cost and high-efficiency method for evaluating a running trajectory of a vehicle to a mapping scenario for autonomous driving can reduce mapping costs and improve mapping efficiency.

### Brief Description of the Drawings

Fig. 1 is a flowchart of a method for evaluating a running trajectory of a vehicle without a GPS signal according to an embodiment of the present disclosure;
Fig. 2 is a flowchart of another method for evaluating a running trajectory of a vehicle without a GPS signal according to an embodiment of the present disclosure;
Fig. 3 is a flowchart of mapping according to an embodiment of the present disclosure;
Fig. 4 is a schematic diagram of a trajectory according to an embodiment of the present disclosure;
Fig. 5 is a schematic diagram of another trajectory according to an embodiment of the present disclosure;
Fig. 6 is a schematic diagram of still another trajectory according to an embodiment of the present disclosure;
Fig. 7 is a schematic diagram of yet another trajectory according to an embodiment of the present disclosure; and
Fig. 8 is a schematic diagram of a structure of an apparatus for evaluating a running trajectory of a vehicle without a GPS signal according to an embodiment of the present disclosure.

### Detailed Description of the Embodiments

To make the objectives, features, and advantages of the present disclosure more comprehensible, the following further describes the present disclosure in detail with reference to the accompanying drawings and specific implementations. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

To evaluate a type of a section with high efficiency and low costs, an embodiment of the present disclosure provides a method for evaluating a running trajectory of a vehicle, which may be applied when there is no GPS signal. Use of a large amount of image data and disposal of an additional sensor are avoided, and only a trajectory of a vehicle needs to be obtained. A singular value of coordinate information corresponding to the trajectory of the vehicle is extracted to determine whether a section corresponding to the trajectory of the vehicle is a straight section or a turning section. Evaluation efficiency is improved without increasing costs.

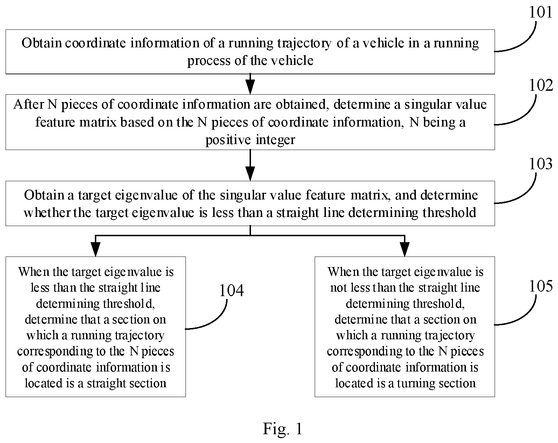

Fig. 1 is a flowchart of a method for evaluating a running trajectory of a vehicle without a GPS signal according to an embodiment of the present disclosure. The method may include the following steps.

In step 101, coordinate information of a running trajectory of a vehicle is obtained in a running process of the vehicle.

During actual application, in the running process of the vehicle, the running trajectory of the vehicle may be first obtained from an existing sensor of the vehicle, and the coordinate information corresponding to the running trajectory is determined based on a coordinate system. The coordinate information may be represented by (xᵢ, yi). This is not limited in this embodiment of the present disclosure.

In an embodiment of the present disclosure, the coordinate information of the running trajectory of the vehicle may be obtained through the following sub-steps.

In sub-step 11, target sensor data is collected from a preset sensor.

As an example, to evaluate a type of the section corresponding to the trajectory of the vehicle without an additional sensor, the running trajectory of the vehicle may be first obtained from the existing sensor of the vehicle, to subsequently determine, based on the running trajectory of the vehicle, whether the section on which the vehicle runs is a straight section or a turning section. The preset sensor includes at least one of the following: an inertial sensor and a speedometer.

When the coordinate information of the running trajectory of the vehicle is obtained, the target sensor data collected by the preset sensor may be first obtained from the preset sensor. The target sensor data may include sensor data obtained from the inertial sensor, or may include sensor data obtained from the speedometer. This is not limited in this embodiment of the present disclosure.

As another example, collection of the target sensor data from the preset sensor may include the following steps:
data collected by the preset sensor is obtained; and the data is denoised to obtain the target sensor data.

After data in each preset sensor is obtained, denoising processing may be performed on the data, so as to obtain the target sensor data. Denoising processing may be, for example, kalman filtering processing. This is not limited in this embodiment of the present disclosure.

In sub-step 12, the coordinate information of the running trajectory of the vehicle is calculated based on the target sensor data.

After the target sensor data is obtained, the coordinate information of the running trajectory of the vehicle in the coordinate system is calculated based on a preset conversion rule and the target sensor data.

In step 102, after N pieces of coordinate information are obtained, a singular value feature matrix is determined based on the N pieces of coordinate information, N being a positive integer.

In the running process of the vehicle, one piece of coordinate information after another is gradually obtained. Evaluation needs to be performed based on a specific amount of coordinate information, to ensure evaluation accuracy. Therefore, a threshold N is set in this embodiment of the present disclosure. N may be a positive integer, for example, "5".

After the N pieces of coordinate information are obtained, the singular value feature matrix of the N pieces of coordinate information is first determined. The singular value feature matrix includes singular values of the N pieces of coordinate information.

In step 103, a target eigenvalue of the singular value feature matrix is obtained, and whether the target eigenvalue is less than a straight line determining threshold is determined.

After the singular value feature matrix is obtained, the target eigenvalue may be extracted therefrom. The target eigenvalue is a value in a second row and a second column of the singular value feature matrix.

During actual application, if the vehicle runs on the straight section, the running trajectory is straight. However, the vehicle may run in a serpentine trajectory on the straight section due to an operation of a driver. The serpentine trajectory is not straight, but may be approximately linearly correlated.

Based on this, the straight line determining threshold greater than 0 may be set in this embodiment of the present disclosure. Then, after the target eigenvalue is obtained, a magnitude relationship between the target eigenvalue and the preset straight line determining threshold may be determined. The straight line determining threshold may be set based on an actual situation.

In step 104, when the target eigenvalue is less than the straight line determining threshold, it is determined that a section on which a running trajectory corresponding to the N pieces of coordinate information is located is a straight section.

If the target eigenvalue is less than the straight line determining threshold, it may be considered that the running trajectory may be approximate to a straight line. In this case, it may be determined that the section on which the running trajectory corresponding to the N pieces of coordinate information is the straight section.

In step 105, when the target eigenvalue is not less than the straight line determining threshold, it is determined that a section on which a running trajectory corresponding to the N pieces of coordinate information is located is a turning section.

However, if the target eigenvalue is not less than the straight line determining threshold, it may be considered that the running trajectory may not be approximate to a straight line. In this case, it may be determined that the section on which the running trajectory corresponding to the N pieces of coordinate information is located is the turning section.

During actual application, after the running trajectory corresponding to the N pieces of coordinate information is determined, a running trajectory corresponding to next N pieces of coordinate information may continue to be determined until all running trajectories in which the vehicle currently runs are evaluated. This is not limited in this embodiment of the present disclosure.

In this embodiment of the present disclosure, the coordinate information of the running trajectory of the vehicle is obtained in the running process of the vehicle. After the N pieces of coordinate information are obtained, the singular value feature matrix is determined based on the N pieces of coordinate information. N is a positive integer. The target eigenvalue of the singular value feature matrix is obtained, and whether the target eigenvalue is less than the straight line determining threshold is determined. When the target eigenvalue is less than the straight line determining threshold, it is determined that the section on which the running trajectory corresponding to the N pieces of coordinate information is located is the straight section; or when the target eigenvalue is not less than the straight line determining threshold, it is determined that the section on which the running trajectory corresponding to the N pieces of coordinate information is located is the turning section. According to this embodiment of the present disclosure, whether the section corresponding to the running trajectory of the vehicle is the straight section or the turning section can be determined based on only the running trajectory obtained by the existing sensor of the vehicle. Therefore, the running trajectory of the vehicle is evaluated with low costs and high efficiency when there is no GPS signal. In addition, applying the low-cost and high-efficiency method for evaluating a running trajectory of a vehicle to a mapping scenario for autonomous driving can reduce mapping costs and improve mapping efficiency.

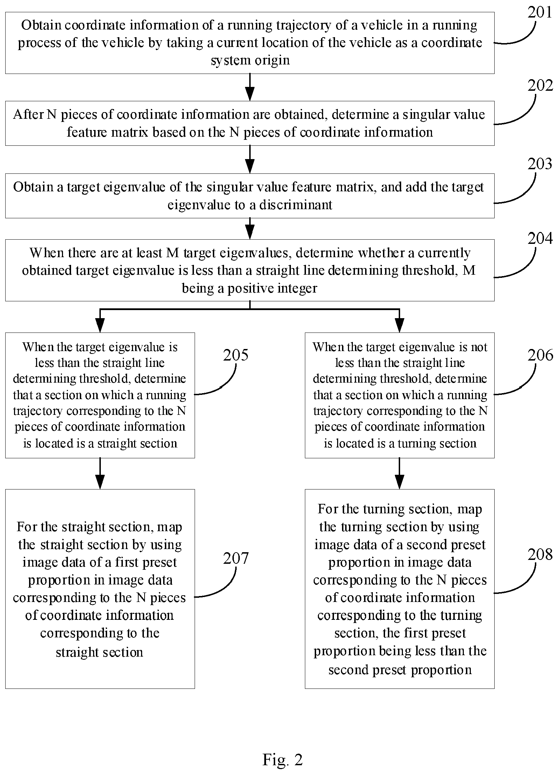

Fig. 2 is a flowchart of another method for evaluating a running trajectory of a vehicle without a GPS signal according to an embodiment of the present disclosure. The method may include the following steps.

In step 201, coordinate information of a running trajectory of the vehicle is obtained in a running process of the vehicle by taking a current location of the vehicle as a coordinate system origin.

During actual application, the current location of the vehicle may be taken as the coordinate system origin in the running process of the vehicle. Then, the coordinate information of the running trajectory of the vehicle may be obtained based on a coordinate system.

As an example, a camera is first calibrated, and a calibration parameter of the camera is recorded. Meanwhile, a speedometer and a combined inertial navigation system are initialized, and parameter recording of each sensor (for example, an accelerometer and an angular radar) is started. Then, the coordinate system is constructed based on the current location, and dead reckoning is performed during running of the vehicle.

The camera is calibrated, and the calibration parameter of the camera is recorded. Meanwhile, the speedometer and the combined inertial navigation system are initialized, parameter recording of each sensor (for example, the accelerometer and the angular radar) is started, a world coordinate origin is constructed by using the current location, and dead reckoning is performed during running of the vehicle, to obtain the coordinate information of the running trajectory of the vehicle.

In step 202, after N pieces of coordinate information are obtained, a singular value feature matrix is determined based on the N pieces of coordinate information.

In the running process of the vehicle, one piece of coordinate information after another is gradually obtained. After the N pieces of coordinate information are obtained, the singular value feature matrix of the N pieces of coordinate information may be first determined.

As an example, an N*2 discrimination matrix may be generated after the N pieces of coordinate information are obtained. Then, singular value decomposition is performed on the discrimination matrix to obtain the singular value feature matrix.

In step 203, a target eigenvalue of the singular value feature matrix is obtained, and the target eigenvalue is added to a discriminant.

After a singular value feature matrix of one set of N pieces of coordinate information is obtained, a target eigenvalue may be extracted therefrom, and the target eigenvalue is added to a preset discriminant.

Then, a target eigenvalue may continue to be extracted from a singular value feature matrix of a next set of N pieces of coordinate information, and the target eigenvalue is added to the discriminant.

In step 204, when there are at least M target eigenvalues in the discriminant, whether a currently obtained target eigenvalue is less than a straight line determining threshold is determined, M being a positive integer.

During actual application, to accurately perform evaluation based on more data, whether the currently obtained target eigenvalue is less than the straight line determining threshold may be determined when there are at least M target eigenvalues in the discriminant.

In an embodiment of the present disclosure, the straight line determining threshold may be determined in the following manner:
determining a target eigenvalue corresponding to all coordinate information corresponding to the running trajectory, and determining the straight line determining threshold based on the target eigenvalue corresponding to all the coordinate information and a preset reference value.

As an example, the straight line determining threshold may be determined based on an empirical value. The empirical value may be a numerical value measured in a laboratory. This is not limited in this embodiment of the present disclosure.

As another example, the straight line determining threshold may be determined based on a current running trajectory of a user and the preset reference value. Specifically, target eigenvalues corresponding to the N pieces of coordinate information may be determined respectively after all the coordinate information corresponding to the running trajectory of the vehicle is obtained.

Then, likelihood estimation or average solving may be performed on all the target eigenvalues. In this case, an obtained result may be directly used as the straight line determining threshold. Certainly, the preset reference value may further be combined to determine the straight line determining threshold, to ensure accuracy.

Specifically, the preset reference value may be used as a determining standard, and calculation of all the target eigenvalues may be used as a user feature. The straight line determining threshold obtained based on the determining standard and the user feature is closer to the user.

During actual application, M may be set based on an actual situation. For example, M may be set to "5". This is not limited in this embodiment of the present disclosure.

In step 205, when the target eigenvalue is less than the straight line determining threshold, it is determined that a section on which a running trajectory corresponding to the N pieces of coordinate information is located is a straight section.

If the target eigenvalue is less than the straight line determining threshold, it may be considered that the running trajectory may be approximate to a straight line. In this case, it may be determined that the section on which the running trajectory corresponding to the N pieces of coordinate information is the straight section.

In step 206, when the target eigenvalue is not less than the straight line determining threshold, it is determined that a section on which a running trajectory corresponding to the N pieces of coordinate information is located is a turning section.

However, if the target eigenvalue is not less than the straight line determining threshold, it may be considered that the running trajectory may not be approximate to a straight line. In this case, it may be determined that the section on which the running trajectory corresponding to the N pieces of coordinate information is located is the turning section.

During actual application, after the running trajectory corresponding to the N pieces of coordinate information is determined, a running trajectory corresponding to next N pieces of coordinate information may continue to be determined until all running trajectories in which the vehicle currently runs are evaluated. This is not limited in this embodiment of the present disclosure.

In an embodiment of the present disclosure, step 201 to step 206 can be repeatedly performed. During this time, to avoid an evaluation error caused by an offset, the method may further include the following step:
when a type of a previous section is different from that of a current section, constructing the coordinate system origin by taking a vehicle location corresponding to the current section as the origin.

During actual application, evaluation may be performed for every N pieces of coordinate information, and a type of a section of a running trajectory corresponding to every N pieces of coordinate information may be determined. The type of the section may include a straight section and a turning section.

After the type of the section corresponding to the current N pieces of coordinate information is obtained, whether the type of the current section is consistent with that of the previous section may be determined. If the type of the current section is consistent with that of the previous section, the next N pieces of coordinate information may continue to be obtained to perform step 201 to step 206.

If the type of the current section is inconsistent with that of the previous section, the coordinate system origin may be constructed by taking the vehicle location corresponding to the current section as the origin, and the next N pieces of coordinate information may be obtained based on a new coordinate system.

In step 207, for the straight section, the straight section is mapped by using image data of a first preset proportion in image data corresponding to the N pieces of coordinate information corresponding to the straight section.

During actual application, after a type corresponding to each section is determined, an amount of image data for mapping may be determined based on the type corresponding to each section.

Specifically, for the straight section, there are enough covisibility graphs, so that calculation may be performed with a plurality of images skipped. Therefore, the straight section may be mapped by using the image data of the first preset proportion in the image data corresponding to the N pieces of coordinate information corresponding to the straight section. A constructed map may be used for subsequent automatic parking.

In step 208, for the turning section, the turning section is mapped by using image data of a second preset proportion in image data corresponding to the N pieces of coordinate information corresponding to the turning section, the first preset proportion being less than the second preset proportion.

For the turning section, there are no enough covisibility graphs, so that no images or few images are skipped. Specifically, the turning section may be mapped by using the image data of the second preset proportion in the image data corresponding to the N pieces of coordinate information corresponding to the turning section. The first preset proportion may be less than the second preset proportion. The second preset proportion may be 50%. The first preset proportion may be 30%. This is not limited in this embodiment of the present disclosure.

In this embodiment of the present disclosure, the coordinate information of the running trajectory of the vehicle is obtained in the running process of the vehicle by taking the current location of the vehicle as the coordinate system origin. After the N pieces of coordinate information are obtained, the singular value feature matrix is determined based on the N pieces of coordinate information. The target eigenvalue of the singular value feature matrix is obtained, and the target eigenvalue is added to the discriminant. When there are at least M target eigenvalues, whether the currently obtained target eigenvalue is less than the straight line determining threshold is determined. M is a positive integer. When the target eigenvalue is less than the straight line determining threshold, it is determined that the section on which the running trajectory corresponding to the N pieces of coordinate information is located is the straight section; or when the target eigenvalue is not less than the straight line determining threshold, it is determined that the section on which the running trajectory corresponding to the N pieces of coordinate information is located is the turning section. For the straight section, the straight section is mapped by using the image data of the first preset proportion in the image data corresponding to the N pieces of coordinate information corresponding to the straight section. For the turning section, the turning section is mapped by using the image data of the second preset proportion in the image data corresponding to the N pieces of coordinate information corresponding to the turning section. The first preset proportion is less than the second preset proportion. According to this embodiment of the present disclosure, whether the section corresponding to the running trajectory of the vehicle is the straight section or the turning section can be determined based on only the running trajectory obtained by the existing sensor of the vehicle. Therefore, the running trajectory of the vehicle is evaluated with low costs and high efficiency when there is no GPS signal.

In addition, an image for automatic parking is formed based on the type of the section, so that mapping can be accelerated.

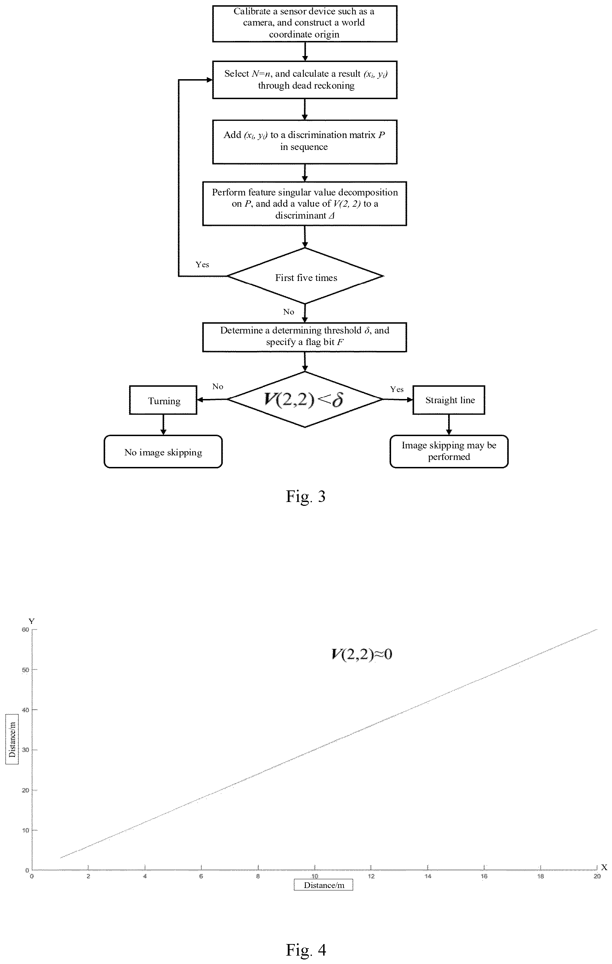

The following describes the foregoing embodiment in more detail with Fig. 3.

In S1, the camera is calibrated, and the calibration parameter of the camera is recorded. Meanwhile, the speedometer and the combined inertial navigation system are initialized, parameter recording of each sensor (for example, the accelerometer and the angular radar) is started, the world coordinate origin is constructed by using the current location, and dead reckoning is performed during running of the vehicle.

In step S1, reference information of each sensing device is determined, and a global origin is constructed. The step of constructing the global origin is quite important because it determines a reference in a specific evaluation process. Each result obtained by all of the following steps is based on a corresponding origin. A deviation of the origin may cause an offset in calculation.

Existence of the offset may cause a great fluctuation of the method. In addition, existence of various errors may cause a fluctuation of a determining coefficient. Therefore, a related decentralized step is first performed in subsequent operations. A point for evaluation is decentralized but not normalized, so as to eliminate impact of the offset on evaluation. Generally, the offset may be initially ignored.

In S2, an evaluation frame number N is set, all location information currently obtained through dead reckoning is recorded, and a result obtained through reckoning and recorded each time is converted into (xᵢ, yi) under this coordinate system based on the set origin.

In step S2, related dead reckoning solving is performed. In this step, corresponding sensor data is collected by using a corresponding kinematics related equation, related kalman filtering is performed on the result, and the corresponding point (xi, yi) is recorded.

In S3, the obtained (xi, yi) is added to a discrimination matrix P in sequence.

In S4, feature singular value decomposition is performed on the obtained P to obtain an eigenvalue matrix V.

In S5, a target eigenvalue V(2, 2) of the current eigenvalue matrix V is recorded and added to a discriminant Δ.

In S6, steps S2 to S5 are repeated for at least five times.

In S3 to S5, a related parameter is constructed based on the discrimination matrix P, corresponding feature singular value decomposition is performed, and V(2, 2) is recorded and added to the discriminant Δ.

The discriminant Δ includes each V(2, 2) obtained through feature singular value decomposition, and is an N×2 discrimination matrix. Each row of the matrix includes coordinate values (xᵢ, yi) of points obtained through dead reckoning by taking a first constructed origin as a center. N is the number of points added in current evaluation determining. An addition speed needs to be adapted to a frequency of a used camera.

In step S6, addition should be repeatedly performed for five times during first initialization, for a purpose of determining a current status and specifying a value of a flag bit F. Here, if a vehicle speed is excessively high or a sensor frequency is slightly low, the number of addition times during initialization needs to be increased. Since construction of a linear relationship involves at least two points, considering a sensor error, the number of addition times is generally five.

In S7, a determining threshold δ is determined.

In S8, after step S6, when a specific added V(2, 2) value is less than the determining threshold, it is determined that a path ahead is a "straight line"; or if a specific added V(2, 2) value is greater than the determining threshold, it is determined that the vehicle currently enters a "turning".

In steps S7 to S8, the determining threshold δ is determined, a current status flag bit is specified to F based on a magnitude of the flag bit, and whether a current status is a "straight line" or a "turning" based on comparison with the determining threshold δ. In this case, an important operation is origin resetting and decentralization.

In S9, previous data is determined whether to be truncated based on determining in S8. If the type of the current section is consistent with that of the previous section, S2 to S5 continue to be performed until the type of the current section is different from that of the previous section. When the type of the current section is different from that of the previous section, truncation is performed, and the origin is reset to perform a new round of determining.

In S10, when an obtained determining result is that the current status is a "straight line", since there are enough covisibility graphs, calculation may be performed with a plurality of images skipped, to perform a mapping action.

On the contrary, when it is determined that the current status is a "turning", since there are no enough covisibility graphs, calculation is performed with no or few images skipped. Therefore, numbers of images used in different cases are formed. This ensures mapping quality, also reduces the number of images used, and achieves mapping acceleration effects.

In steps S9 and S10, a change of the flag bit is determined, to determine whether to perform truncation or continue mapping. In addition, whether to perform a frame skipping operation in current frame mapping is determined based on the determining result of the "straight line" or the "turning".

In addition, it should also be noted that the number of points put added to the discriminant Δ after each cyclic mapping-truncation operation should not be less than n points. Generally, the number n should not be less than five location points obtained through dead reckoning.

After the origin is constructed, all (xi, yi) is obtained by the inertial sensor and the speedometer through dead reckoning. In this process, no additional sensing device is needed.

The evaluation frame number N is a value selected by experience. A value of the evaluation frame number N is related to the used vehicle, the camera frequency, and precision of each sensing device. For a vehicle that carries a same sensing device and that is of a same model number, the value of N may be statistically estimated by using a manual driving experiment. Generally, N is determined by a frequency of each sensor and the vehicle speed in a case that the sensor is in a good condition.

Repeating addition for at least five times in an initialization process is for constructing an initial evaluated value. Generally, a straight trajectory is initially desired.

The determining threshold δ is also a value selected by experience. The difference is that this value is an evaluation of a deviation value of the "straight line", and is a geometric descriptor unrelated to the sensor. Generally, this value is also suitable to be determined by an experiment. In addition, the value may be an interval value.

"Truncation-mapping-truncation" are cyclically performed based on an evaluation to form a new evaluation. In addition, based on an evaluation result, the "straight line" is mapped by using a small number of images, and the "turning" is mapped by using a large number of images. This ensures mapping quality, also reduces calculations, and accelerates a mapping process.

After coordinate information shown in Table 1 is measured, a trajectory shown in Fig. 4 may be obtained based on Table 1. For the trajectory shown in Fig. 4 and the coordinate information shown in Table 1, it is obtained through calculation that the target eigenvalue is 0, as shown in Table 2.

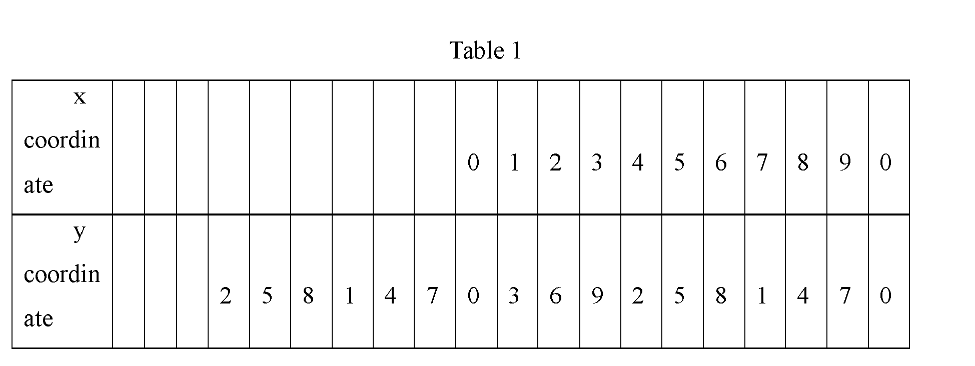

**Table 2**

| | |
|---|---|
| 169.4107 | 0 |
| 0 | 4.4710e⁻¹⁵ |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |

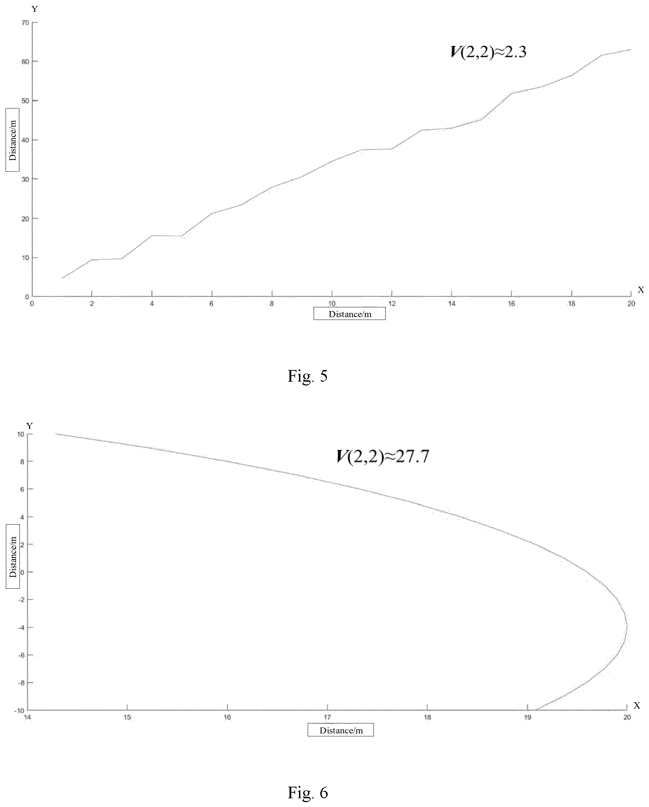

After coordinate information shown in Table 3 is measured, a trajectory shown in Fig. 5 may be obtained based on Table 3. For the trajectory shown in Fig. 5 and the coordinate information shown in Table 3, it is obtained through calculation that the target eigenvalue is as shown in Table 4.

**Table 3**

| x coordinate | y coordinate |
|---|---|
| 1 | 4.6767842 |
| 2 | 9.398639757 |
| 3 | 9.682765687 |
| 4 | 15.60613749 |
| 5 | 15.53380931 |
| 6 | 21.26878674 |
| 7 | 23.47086968 |
| 8 | 27.89525862 |
| 9 | 30.57518539 |
| 10 | 34.5186028 |
| 11 | 37.45461252 |
| 12 | 37.67081526 |
| 13 | 42.49372916 |
| 14 | 42.98904913 |
| 15 | 45.15270473 |
| 16 | 51.7203713 |
| 17 | 53.50011218 |
| 18 | 56.39961071 |
| 19 | 61.52361119 |
| 20 | 63.04933324 |

**Table 4**

| | |
|---|---|
| 180.1505 | 0 |
| 0 | 2.3234 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |

After coordinate information shown in Table 5 is measured, a trajectory shown in Fig. 6 may be obtained based on Table 5. For the trajectory shown in Fig. 6 and the coordinate information shown in Table 5, it is obtained through calculation that the target eigenvalue is as shown in Table 6.

**Table 5**

| x coordinate | y coordinate |
|---|---|
| 19.07878403 | -10 |
| 19.36491673 | -9 |
| 19.59591794 | -8 |
| 19.77371993 | -7 |
| 19.89974874 | -6 |
| 19.97498436 | -5 |
| 20 | -4 |
| 19.97498436 | -3 |
| 19.89974874 | -2 |
| 19.77371993 | -1 |
| 19.59591794 | 0 |
| 19.36491673 | 1 |
| 19.07878403 | 2 |
| 18.734994 | 3 |
| 18.33030278 | 4 |
| 17.8605711 | 5 |
| 17.32050808 | 6 |
| 16.70329309 | 7 |
| 16 | 8 |
| 15.19868415 | 9 |
| 14.28285686 | 10 |

**Table 6**

| | |
|---|---|
| 85.4321 | 0 |
| | |
| 0 | 27.6650 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |
| 0 | 0 |

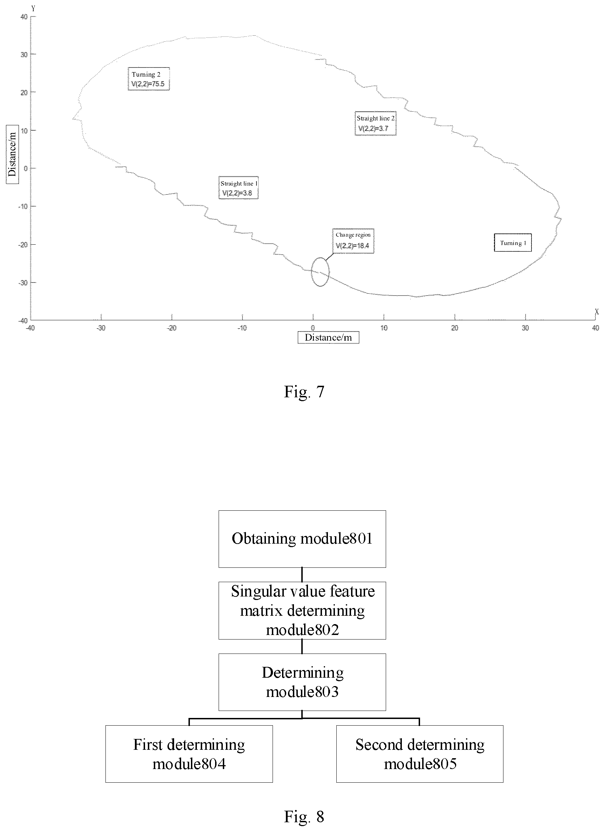

After coordinate information shown in Table 7 is measured, a trajectory as shown in Fig. 7 may be obtained based on Table 7. The trajectory may include a straight line 1, a turning 1, a straight line 2, and a turning 2. When V(2, 2)=18.4, it may be determined that the threshold is exceeded, and a change from the straight line 1 to the turning 1 occurs.

**Table 7**

| Straight line 1 | | Turning 1 | | Straight line 2 | | Turning 2 | |
|---|---|---|---|---|---|---|---|
| x coordinate | y coordinate | x coordinate | y coordinate | x coordinate | y coordinate | x coordinate | y coordinate |
| 0.7698743 1 | -27.51439 694 | 0.979748 378 | -27.30452 287 | 29.05414 556 | 0.769874 31 | -27.25410 81 | 1.0301631 5 |
| -0.104394 731 | -26.97445 242 | 5.561857 187 | -31.55417 493 | 28.17987 652 | 1.309818 832 | -31.71777 817 | 5.3982539 48 |
| -1.300263 525 | -26.75610 765 | 7.689746 789 | -32.92335 246 | 26.98400 772 | 1.528163 6 | -32.48174 479 | 8.1313544 6 |
| -1.761446 113 | -25.80307 667 | 9.829217 252 | -33.35471 842 | 26.52282 513 | 2.481194 574 | -32.67435 528 | 10.509580 4 |
| -2.643448 722 | -25.27086 572 | 11.72242 835 | -33.53240 565 | 25.64082 252 | 3.013405 527 | -32.77078 434 | 12.484049 65 |
| -3.259672 224 | -24.47287 566 | 13.48457 345 | -33.50798 473 | 25.02459 902 | 3.811395 588 | -33.98119 216 | 13.011366 03 |
| -3.882711 899 | -23.68170 177 | 14.60435 737 | -33.87892 375 | 24.40155 935 | 4.602569 476 | -32.74705 654 | 15.736224 58 |
| -4.323846 865 | -22.70862 318 | 16.29968 319 | -33.47877 332 | 23.96042 438 | 5.575648 072 | -32.91804 739 | 16.860409 12 |
| -5.582372 604 | -22.55293 535 | 17.68177 853 | -33.22990 972 | 22.70189 864 | 5.731335 895 | -33.21093 805 | 17.700750 2 |
| -5.009886 866 | -20.56623 605 | 18.39671 958 | -33.50957 529 | 23.27438 438 | 7.718035 196 | -33.07753 414 | 18.828760 72 |
| -5.653887 027 | -19.79602 265 | 19.43593 418 | -33.34323 45 | 22.63038 422 | 8.488248 596 | -32.79047 653 | 19.988692 15 |
| -7.041878 454 | -19.76980 052 | 20.70418 141 | -32.83875 172 | 21.24239 279 | 8.514470 732 | -32.67590 339 | 20.867029 74 |
| -7.751402 417 | -19.06511 092 | 21.76554 107 | -32.44169 297 | 20.53286 883 | 9.219160 332 | -31.99770 829 | 22.209525 75 |
| -8.685809 041 | -18.58530 398 | 22.86419 621 | -31.91535 763 | 19.59846 221 | 9.698967 27 | -31.57336 705 | 23.206186 8 |
| -8.549414 167 | -17.03469 554 | 23.89809 078 | -31.36765 559 | 19.73485 708 | 11.24957 571 | -30.64907 231 | 24.616674 06 |
| -10.05273 155 | -17.12379 936 | 24.38518 145 | -31.28521 767 | 18.23153 97 | 11.16047 189 | -30.17848 634 | 25.491912 78 |
| -11.14690 | -16.80375 | 25.43259 | -30.56448 | 17.13736 | 11.48051 | -29.86049 | 26.136592 |
| 437 | 862 | 719 | 697 | 688 | 263 | 201 | 15 |
| -10.85043 718 | -15.09307 786 | 26.80396 136 | -29.44457 28 | 17.43383 407 | 13.19119 338 | -29.67767 335 | 26.570860 81 |
| -12.14331 381 | -14.97174 093 | 26.82838 962 | -29.59837 619 | 16.14095 744 | 13.31253 032 | -28.41022 578 | 28.016540 03 |
| -13.07249 191 | -14.48670 548 | 28.48832 987 | -28.04483 516 | 15.21177 933 | 13.79756 577 | -28.17445 091 | 28.358714 12 |
| -13.53626 741 | -13.53626 741 | 29.01460 211 | -27.55394 038 | 14.74800 384 | 14.74800 384 | -27.75818 059 | 28.810361 9 |
| -14.70456 062 | -13.29034 705 | 29.46229 827 | -27.07086 676 | 13.57971 063 | 14.99392 419 | -26.15097 339 | 30.382191 64 |
| -15.35838 925 | -12.52996 212 | 30.20612 153 | -26.22064 428 | 12.92588 2 | 15.75430 913 | -25.48525 512 | 30.941510 68 |
| -14.85038 008 | -10.60773 939 | 30.48287 1 | -25.76566 315 | 13.43389 117 | 17.67653 185 | -25.17771 222 | 31.070821 94 |
| -15.53636 094 | -9.879506 689 | 31.28581 804 | -24.71126 613 | 12.74791 031 | 18.40476 456 | -24.23640 233 | 31.760681 84 |
| -16.81485 664 | -9.743788 825 | 32.33382 201 | -23.33657 712 | 11.46941 461 | 18.54048 242 | -23.41909 86 | 32.251300 52 |
| -18.29510 7 | -9.809825 622 | 32.42231 959 | -22.84342 678 | 9.989164 251 | 18.47444 563 | -23.07861 906 | 32.187127 31 |
| -18.73971 322 | -8.840218 285 | 32.86066 022 | -21.91889 362 | 9.544558 025 | 19.44405 296 | -21.98815 996 | 32.791393 89 |
| -19.26925 202 | -7.955543 517 | 32.99206 566 | -21.21516 838 | 9.015019 231 | 20.32872 773 | -20.74037 775 | 33.466856 29 |
| -19.27430 559 | -6.546383 533 | 33.62432 534 | -19.91860 779 | 9.009965 653 | 21.73788 771 | -20.06177 329 | 33.481159 84 |
| -21.19009 828 | -7.047962 655 | 34.08471 224 | -18.69445 644 | 7.094172 968 | 21.23630 859 | -18.05205 334 | 34.727115 34 |
| -21.85577 451 | -6.299425 328 | 34.41045 757 | -17.49583 73 | 6.428496 733 | 21.98484 592 | -17.88282 641 | 34.023468 46 |
| -22.37393 195 | -5.403369 205 | 34.33664 071 | -16.57504 753 | 5.910339 294 | 22.88090 204 | -16.63168 008 | 34.280008 17 |
| -22.36085 057 | -3.976074 256 | 34.44905 306 | -15.32940 345 | 5.923420 681 | 24.30819 699 | -15.44077 803 | 34.337678 48 |
| -22.94404 | -3.145057 | 35.12911 | -13.35416 | 5.340224 | 25.13921 | -14.00064 | 34.482631 |
| 698 | 109 | 75 | 362 | 266 | 414 | 918 | 95 |
| -23.77711 84 | -2.563914 961 | 34.14061 967 | -12.85193 851 | 4.507152 851 | 25.72035 629 | -12.23612 935 | 34.756428 83 |
| -24.77945 856 | -2.152041 565 | 34.82629 351 | -10.42854 049 | 3.504812 684 | 26.13222 968 | -10.84705 507 | 34.407778 93 |
| -25.34243 757 | -1.300807 005 | 34.52606 994 | -8.657865 729 | 2.941833 682 | 26.98346 424 | -8.186083 093 | 34.997852 58 |
| -26.42557 648 | -0.969732 354 | 33.83065 556 | -6.782443 692 | 1.858694 771 | 27.31453 889 | -6.933316 478 | 33.679782 78 |
| -26.46012 526 | 0.409932 429 | 32.09175 718 | -5.024274 936 | 1.824145 992 | 28.69420 368 | -4.845762 734 | 32.270269 38 |
| -28.00083 872 | 0.283432 523 | 28.54614 243 | 0.261871 184 | 0.283432 523 | 28.56770 377 | 1.357321 453 | 29.641592 7 |

It should be noted that for ease of description, the method embodiments are described as a combination of a series of actions. However, a person skilled in the art should know that the embodiments of the present disclosure are not limited by the described action sequence, because some steps may be performed in another sequence or simultaneously according to the embodiments of the present disclosure. In addition, a person skilled in the art should also know that all the embodiments described in the specification are preferred embodiments, and the related actions are not necessarily mandatory to the embodiments of the present disclosure.

Fig. 8 is a schematic diagram of a structure of an apparatus for evaluating a running trajectory of a vehicle without a GPS signal according to an embodiment of the present disclosure. The apparatus may include the following modules:
an obtaining module 801, configured to obtain coordinate information of a running trajectory of a vehicle in a running process of the vehicle;
a singular value feature matrix determining module 802, configured to: after N pieces of coordinate information are obtained, determine a singular value feature matrix based on the N pieces of coordinate information, N being a positive integer;
a determining module 803, configured to obtain a target eigenvalue of the singular value feature matrix, and determine whether the target eigenvalue is less than a straight line determining threshold;
a first determining module 804, configured to: when the target eigenvalue is less than the straight line determining threshold, determine that a section on which a running trajectory corresponding to the N pieces of coordinate information is located is a straight section; and
a second determining module 805, configured to: when the target eigenvalue is not less than the straight line determining threshold, determine that a section on which a running trajectory corresponding to the N pieces of coordinate information is located is a turning section.

In an embodiment of the present disclosure, the apparatus further includes:
a threshold determining module, configured to: determine a target eigenvalue corresponding to all coordinate information corresponding to the running trajectory, and determine the straight line determining threshold based on the target eigenvalue corresponding to all the coordinate information and a preset reference value.

In an embodiment of the present disclosure, the apparatus further includes:
a first mapping module, configured to: for the straight section, map the straight section by using image data of a first preset proportion in image data corresponding to the N pieces of coordinate information corresponding to the straight section; and
a second mapping module, configured to: for the turning section, map the turning section by using image data of a second preset proportion in image data corresponding to the N pieces of coordinate information corresponding to the turning section.

The first preset proportion is less than the second preset proportion.

In an embodiment of the present disclosure, the obtaining module 801 is configured to obtain the coordinate information of the running trajectory of the vehicle by taking a current location of the vehicle is a coordinate system origin.

In an embodiment of the present disclosure, the apparatus further includes:
a coordinate reconstruction module, configured to: when a type of a previous section is different from that of a current section, construct the coordinate system origin by taking a vehicle location corresponding to the current section as the origin.

In an embodiment of the present disclosure, the determining module 803 is configured to: obtain the target eigenvalue of the singular value feature matrix, and add the target eigenvalue to a discriminant; and when there are at least M target eigenvalues in the discriminant, determine whether a currently obtained target eigenvalue is less than the straight line determining threshold, M being a positive integer.

In an embodiment of the present disclosure, the obtaining module 801 is configured to: collect target sensor data from a preset sensor; and calculate the coordinate information of the running trajectory of the vehicle based on the target sensor data.

In an embodiment of the present disclosure, the first sensor includes at least one of the following:
an inertial sensor and a speedometer.

In an embodiment of the present disclosure, the obtaining module 801 is configured to: obtain data collected by the preset sensor; and denoise the data to obtain the target sensor data.

In this embodiment of the present disclosure, the coordinate information of the running trajectory of the vehicle is obtained in the running process of the vehicle. After the N pieces of coordinate information are obtained, the singular value feature matrix is determined based on the N pieces of coordinate information. N is a positive integer. The target eigenvalue of the singular value feature matrix is obtained, and whether the target eigenvalue is less than the straight line determining threshold is determined. When the target eigenvalue is less than the straight line determining threshold, it is determined that the section on which the running trajectory corresponding to the N pieces of coordinate information is located is the straight section; or when the target eigenvalue is not less than the straight line determining threshold, it is determined that the section on which the running trajectory corresponding to the N pieces of coordinate information is located is the turning section. According to this embodiment of the present disclosure, whether the section corresponding to the running trajectory of the vehicle is the straight section or the turning section can be determined based on only the running trajectory obtained by the existing sensor of the vehicle. Therefore, the running trajectory of the vehicle is evaluated with low costs and high efficiency when there is no GPS signal. In addition, applying the low-cost and high-efficiency method for evaluating a running trajectory of a vehicle to a mapping scenario for autonomous driving can reduce mapping costs and improve mapping efficiency.

An embodiment of the present disclosure further provides a vehicle, which may include a processor, a memory, and a computer program stored on the memory and capable of running on the processor. When the computer program is executed by the processor, the method for evaluating a running trajectory of a vehicle without a GPS signal is implemented.

An embodiment of the present disclosure further provides a computer-readable storage medium. A computer program is stored on the computer-readable storage medium. When the computer program is executed by a processor, the method for evaluating a running trajectory of a vehicle without a GPS signal is implemented.

The apparatus embodiment is essentially similar to the method embodiment, and therefore is described briefly. For related information, refer to descriptions of the related parts in the method embodiment.

All embodiments in this specification are described in a progressive manner. Each embodiment focuses on differences from other embodiments. For the part that is the same or similar between different embodiments, reference may be made between the embodiments.

A person skilled in the art should understand that the embodiments of the present disclosure may be provided as a method, an apparatus (device), or a computer program product. Therefore, the embodiments of the present disclosure may use a form of hardware only embodiments, software only embodiments, or embodiments with a combination of software and hardware. Moreover, the embodiments of the present disclosure may use a form of a computer program product that is implemented on one or more computer-usable storage media (including but not limited to a disk memory, a CD-ROM, an optical memory, and the like) that include computer-usable program code.

The embodiments of the present disclosure are described with reference to the flowcharts and/or block diagrams of the method, the terminal device (system), and the computer program product according to the embodiments of the present disclosure. It should be understood that computer program instructions may be used to implement each process and/or each block in the flowcharts and/or the block diagrams, or a combination of a process and/or a block in the flowcharts and/or the block diagrams. These computer program instructions may be provided for a general-purpose computer, a dedicated computer, an embedded processor, or a processor of any other programmable data processing terminal device to generate a machine, so that the instructions executed by a computer or a processor of any other programmable data processing terminal device generate an apparatus for implementing a specific function in one or more processes in the flowcharts and/or in one or more blocks in the block diagrams.

These computer program instructions may be stored in a computer-readable memory that can instruct the computer or any other programmable data processing terminal device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or other programmable data processing terminal device, so that a series of operations and steps are performed on the computer or the other programmable terminal device, thereby generating computer-implemented processing. Therefore, the instructions executed on the computer or the other programmable terminal device provide steps for implementing a specific function in one or more processes in the flowcharts and/or in one or more blocks in the block diagrams.

Although some preferred embodiments of the embodiments of the present disclosure have been described, a person skilled in the art can make variations and modifications to these embodiments once they learn the basic inventive concept. Therefore, the following claims are intended to be construed as covering the preferred embodiments and all variations and modifications falling within the scope of the present disclosure.

Finally, it should be noted that in this specification, relational terms such as first and second are used only to differentiate an entity or operation from another entity or operation, and do not necessarily require or imply that any actual relationship or sequence exists between these entities or operations. Moreover, the terms "include" and "contain", or any of their variants are intended to cover a non-exclusive inclusion, so that a process, method, article, or terminal device that includes a list of elements not only includes those elements but also includes other elements that are not expressly listed, or further includes elements inherent to such process, method, article, or terminal device. With no more restrictions, an element defined by statement "including a/an..." does not exclude the existence of the same other element in a process, method, commodity, or device including the element.

The above describes in detail the provided method and apparatus for evaluating a running trajectory of a vehicle without a GPS signal. The principle and implementations of the present disclosure are elaborated with specific examples in the present disclosure, and the descriptions made to the embodiments are only adopted to help the method of the present disclosure and the core concept thereof to be understood. In addition, a person of ordinary skill in the art may make variations to the specific implementations and the application scope according to the concept of the present disclosure. From the above, the content of the specification should not be understood as a limitation on the present disclosure.

## Claims

1. A method for evaluating a running trajectory of a vehicle without a GPS signal, comprising:
obtaining coordinate information of a running trajectory of a vehicle in a running process of the vehicle;
after N pieces of coordinate information are obtained, determining a singular value feature matrix based on the N pieces of coordinate information, N being a positive integer;
obtaining a target eigenvalue of the singular value feature matrix, and determining whether the target eigenvalue is less than a straight line determining threshold; and
when the target eigenvalue is less than the straight line determining threshold, determining that a section on which a running trajectory corresponding to the N pieces of coordinate information is located is a straight section; or
when the target eigenvalue is not less than the straight line determining threshold, determining that a section on which a running trajectory corresponding to the N pieces of coordinate information is located is a turning section.

2. The method according to claim 1, further comprising:
determining a target eigenvalue corresponding to all coordinate information corresponding to the running trajectory; and
determining the straight line determining threshold based on the target eigenvalue corresponding to all the coordinate information and a preset reference value.

3. The method according to claim 1, further comprising:
for the straight section, mapping the straight section by using image data of a first preset proportion in image data corresponding to the N pieces of coordinate information corresponding to the straight section; or
for the turning section, mapping the turning section by using image data of a second preset proportion in image data corresponding to the N pieces of coordinate information corresponding to the turning section,
the first preset proportion being less than the second preset proportion.

4. The method according to claim 1, wherein the obtaining coordinate information of a running trajectory of a vehicle comprises:
obtaining the coordinate information of the running trajectory of the vehicle by taking a current location of the vehicle is a coordinate system origin.

5. The method according to claim 4, further comprising:
when a type of a previous section is different from that of a current section, constructing the coordinate system origin by taking a vehicle location corresponding to the current section as the origin.

6. The method according to claim 1, wherein the obtaining a target eigenvalue of the singular value feature matrix, and determining whether the target eigenvalue is less than a straight line determining threshold comprises:
obtaining the target eigenvalue of the singular value feature matrix, and adding the target eigenvalue to a discriminant; and
when there are at least M target eigenvalues in the discriminant, determining whether a currently obtained target eigenvalue is less than the straight line determining threshold,
M being a positive integer.

7. The method according to claim 1, wherein the obtaining coordinate information of a running trajectory of a vehicle comprises:
collecting target sensor data from a preset sensor; and
calculating the coordinate information of the running trajectory of the vehicle based on the target sensor data.

8. The method according to claim 7, wherein the preset sensor comprises at least one of the following:
an inertial sensor and a speedometer.

9. The method according to claim 7, wherein the collecting target sensor data from a preset sensor comprises:
obtaining data collected by the preset sensor; and
denoising the data to obtain the target sensor data.

10. An apparatus for evaluating a running trajectory of a vehicle without a GPS signal, wherein the apparatus comprises:
an obtaining module, configured to obtain coordinate information of a running trajectory of a vehicle in a running process of the vehicle;
a singular value feature matrix determining module, configured to: after N pieces of coordinate information are obtained, determine a singular value feature matrix based on the N pieces of coordinate information, N being a positive integer;
a determining module, configured to obtain a target eigenvalue of the singular value feature matrix, and determine whether the target eigenvalue is less than a straight line determining threshold;
a first determining module, configured to: when the target eigenvalue is less than the straight line determining threshold, determine that a section on which a running trajectory corresponding to the N pieces of coordinate information is located is a straight section; and
a second determining module, configured to: when the target eigenvalue is not less than the straight line determining threshold, determine that a section on which a running trajectory corresponding to the N pieces of coordinate information is located is a turning section.

11. A vehicle, comprising a processor, a memory, and a computer program stored on the memory and capable of running on the processor, the computer program, when executed by the processor, implementing the method for evaluating a running trajectory of a vehicle without a GPS signal according to any one of claims 1 to 9.

12. A computer-readable storage medium, storing a computer program which, when executed by a processor, implements the method for evaluating a running trajectory of a vehicle without a GPS signal according to any one of claims 1 to 9.
